# EUROPÄISCHE PATENTSCHRIFT

(11) **EP 3 581 309 B1**
(45) Veröffentlichungstag und Bekanntmachung des Hinweises auf die Patenterteilung: **19.10.2022**
(21) Anmeldenummer: 19183813.5
(22) Anmeldetag: 09.01.2012
(51) Int. Cl.: B23D 51/16, B25F 5/02

(54) **WERKZEUGMASCHINE, MIT EINER HIN- UND HERGEHENDEN ABTRIEBSSPINDEL**
MACHINE TOOL WITH RECIPROCATING OUTPUT SHAFT
MACHINE-OUTIL POURVUE D'UNE BROCHE MENÉE DE VA-ET-VIENT

(30) Priorität: 09.02.2011 DE 102011010745
(43) Veröffentlichungstag der Anmeldung: 18.12.2019
(62) Teilanmeldung aus: 17191663.8
(73) Patentinhaber: Robert Bosch GmbH, 70442 Stuttgart (DE)
(72) Erfinder: Koncsik, Tamas, 3793 Sajoecseg (HU); Kocsis, Timea, 3525 Miskolc (HU); Endre, Zador, IP38DH Ipswich, Suffolk (GB)

(56) Entgegenhaltungen:
- EP-A2- 1 738 851
- EP-A2- 1 844 646
- GB-A- 2 234 034
- US-A1- 2003 192 191
- US-A1- 2009 183 887
- US-A1- 2009 223 071
- US-B1- 6 286 611
- US-B1- 6 449 851

## Beschreibung

Die Erfindung bezieht sich auf eine Werkzeugmaschine, mit einer hin- und hergehenden Abtriebsspindel nach dem Oberbegriff des Anspruchs 1.

Eine solche Werkzeugmaschine ist offenbart in EP 1844646.

Bekannt sind motorisch angetriebene Säbelsägen oder Handsägen, beispielsweise elektromotorisch angetriebene Fuchsschwanzsägen, bei denen das Sägeblatt eine hin- und hergehende, oszillierende Arbeitsbewegung ausführt.

Die US 2009/0223071 A1 und US 2010/0162579 A1 offenbaren Werkzeugmaschinen mit einer hin- und hergehenden Abtriebsspindel und einem Antriebsmotor, die über ein Getriebe miteinander gekoppelt sind. Die Längsachsen des Antriebsmotors und der Abtriebsspindel schließen dabei einen stumpfen Winkel ein. Der Antriebsmotor, die Abtriebsspindel und der Handgriff sind sternförmig angeordnet, wodurch die Werkzeugmaschine relativ viel Platz benötigt. Je nachdem kann der nach oben abstehende Antriebsmotor die Sicht auf das Schnittgut behindern.

Die US7818887 offenbart eine Werkzeugmaschine mit einer hin- und hergehenden Abtriebsspindel und einem Antriebsmotor, die über ein Getriebe miteinander gekoppelt sind, wobei die Abtriebsspindel einen Befestigungsabschnitt zum Befestigen eines Werkzeugs aufweist, wobei der Antriebsmotor einen mit dem Getriebe verbundenen Antriebsabschnitt und ein vom Getriebe entferntes, erstes Ende aufweist. Der Antriebsmotor ist in einem Handgriff der Werkzeugmaschine angeordnet. Die Werkzeugmaschine ist recht kompakt. Der Griff muss jedoch einen Mindestumfang haben, um den Antriebsmotor aufnehmen zu können.

Auch ist bspw. durch die Craftsman 14299 Nextec bekannt, dass der Griff und die Längsachse der Spindel fluchten. Der mit dem Getriebe verbundene Motor verläuft im rechten Winkel zu Griff und Längsachse der Spindel.

Die US 6449851 offenbart eine ähnliche Säbelsäge mit einem Griff, Motor, Getriebe und einer Spindel, wobei die Längsachsen des Motors und der Spindel im rechten Winkel zueinander angeordnet sind. Der Griff verläuft fast rechtwinklig zum Motor fluchtet aber nicht mit der Spindel.

Die US 5134777 offenbart einen Fuchsschwanz mit Griff, Motor, Getriebe und Spindel, wobei die Längsachsen des Motors und der Spindel im rechten Winkel zueinander angeordnet sind. Der Griff verläuft fast parallel zur Längsachse des Motors, ist jedoch leicht geneigt. Der Antriebsmotor ist in waagerechter Stellung des Fuchsschwanz nach oben gerichtet ist und kann gegebenenfalls die Sicht auf das Schnittgut behindern.

Aus der US 2004/237678 A1 ist ein ähnlicher Fuchsschwanz bekannt, wobei der Antriebsmotor in waagerechter Stellung des Fuchsschwanz nach unten gerichtet ist.

Durch die Black & Decker CompactSaw LPS7000 ist bekannt, dass die Längsachsen des Motors und der Spindel fluchten zueinander bzw. parallel zueinander verlaufen. Der Griff setzt pistolenartig am Motor an.

Durch die GB 2234034 und US 2006/0005402 A1 sind elektrische Messer bekannt, bei denen Batterie, Motor, Getriebe und Abtriebsspindel hintereinander angeordnet sind.

Durch die US 6286611 B1 und US 2004/143976 A1 sind weitere sogenannte Kompaktsägen bekannt, bei denen der Griff den Motor enthält, der seinerseits von der Abtriebsspindel weg gerichtet ist.

Daneben sind noch Säbelsägen bekannt mit einem Griff, einem Motor, einem Getriebe und einer Spindel, die alle hintereinander angeordnet sind, wobei die Längsachsen des Motors und der Spindel fluchten bzw. parallel zueinander verlaufen.

### Offenbarung der Erfindung

Der Erfindung liegt die Aufgabe zu Grunde, mit einfachen konstruktiven Maßnahmen eine kompakte Werkzeugmaschine zu schaffen. Diese Aufgabe wird erfindungsgemäß mit den Merkmalen des Anspruches 1 gelöst. Die Unteransprüche geben zweckmäßige Weiterbildungen an.

Hierzu ist eine Werkzeugmaschine, insbesondere Säbelsäge, vorgesehen mit einer hin- und hergehenden Abtriebsspindel und einem Antriebsmotor, die über ein Getriebe miteinander gekoppelt sind, wobei eine Längsseite der Abtriebsspindel und eine Längsseite des Antriebsmotors nebeneinander verlaufen, so dass der Antriebsmotor neben der Abtriebsspindel angeordnet ist.

Ein Vorteil der Werkzeugmaschine ist, dass der Antriebsmotor in einem Bereich liegt, der die Sicht auf das Schnittgut nicht behindert.

Die erfindungsgemäße Werkzeugmaschine ist gut ausbalanciert. Je nach Auslegung "zieht" der Antriebsmotor die Säge leicht in Richtung des Schnittguts.

Verbessert werden diese Effekte dadurch, dass die Abtriebsspindel einen Befestigungsabschnitt zum Befestigen eines Werkzeugs aufweist, dass der Antriebsmotor einen mit dem Getriebe verbundenen Antriebsabschnitt und ein vom Getriebe entferntes, erstes Ende aufweist und dass das vom Getriebe entfernte, erste Ende des Antriebsmotors näher beim Befestigungsabschnitt angeordnet ist als der mit dem Getriebe verbundene Antriebsabschnitt.

Dadurch, dass sich die Längsachse des Antriebsmotors und die Längsachse der Abtriebsspindel auf der vom Getriebe entfernten Seite unter einem Winkel α schneiden, so dass der Antriebsmotor und die Abtriebsspindel so geneigt sind, dass der Antriebsabschnitt weiter von der Abtriebsspindel entfernt ist als das erste Ende des Antriebsmotors, kann ein größerer Hub der Abtriebspindel erreicht werden.

Dadurch, dass der Winkel α zwischen 5° und 30°, insbesondere zwischen 15° und 20°, liegt und vorzugsweise 17° beträgt, ergibt sich eine besonders kompakte Bauform.

Vorzugsweise umfasst das Getriebe eine Taumelplattenbaugruppe, die auf einer Getriebewelle angeordnet ist, die parallel zur Längsachse des Antriebsmotors verläuft, was eine kostengünstige Ausbildung ermöglicht.

Dadurch, dass die Getriebewelle in einer vom Antriebsmotor und der Abtriebsspindel gebildeten Lücke liegt und vorzugsweise fliegend gelagert ist, wird der Bauraum besser genutzt.

Dadurch, dass die Taumelplattenbaugruppe einen ersten Abschnitt aufweist, der um die Getriebewelle angeordnet ist und einen zweiten Abschnitt, der in die Abtriebsspindel eingreift, und dass der erste und zweite Abschnitt, einen Winkel β einschließen, der 90° - α beträgt, kann der Hub der Abtriebsspindel vergrößert werden.

Eine besonders ergonomische Form ergibt sich dadurch, dass die Werkzeugmaschine einen Handgriff aufweist, der mit der Abtriebsspindel einen stumpfen Winkel γ einschließt, der insbesondere zwischen 15° und 45° liegt, vorzugsweise °30 beträgt

Dadurch, dass der erste Winkel α und der stumpfe Winkel γ in einer Ebene und auf einer Seite der Abtriebsspindel angeordnet sind bzw. dadurch, dass der Antriebsmotor unterhalb der Abtriebsspindel angeordnet ist liegt die Werkzeugmaschine besonders gut in der Hand.

Vorzugsweise ist Gehäuse für eine Werkzeugmaschine vorgesehen mit einem Aufnahmebereich für eine Abtriebspindel, mit einem Griffabschnitt, mit einem Bauch zur Aufnahme eines Antriebsmotor, der unterhalb des Aufnahmebereichs für die Abtriebsspindel liegt, wobei der Aufnahmebereich und der Bauch eine senkrecht zur Abtriebspindel verlaufende, ovale Querschnittsfläche aufweisen, die den Antriebsmotor und die Abtriebsspindel zumindest teilweise umschließt.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer elektromotorischen Säbelsäge, die als Werkzeug ein Sägeblatt aufweist, das eine lineare, oszillierende Sägebewegung ausübt, mit einer Stützeinrichtung zur Aufnahme eines zu bearbeitenden Objektes, wobei die Stützeinrichtung schwenkbar am Gehäuse der Werkzeugmaschine angeordnet ist,
- Fig. 2: die Säbelsäge einschließlich Stützeinrichtung in Seitenansicht,
- Fig. 3a: eine Seitenansicht der Säbelsäge mit einigen Komponenten, die in einer Gehäuseschale angeordnet sind,
- Fig. 3b: die Komponenten aus Fig. 3a ohne Gehäuseschale,
- Fig. 4: eine Explosionsdarstellung der Säbelsäge.

In den Figuren sind gleiche Bauteile mit gleichen Bezugszeichen versehen.

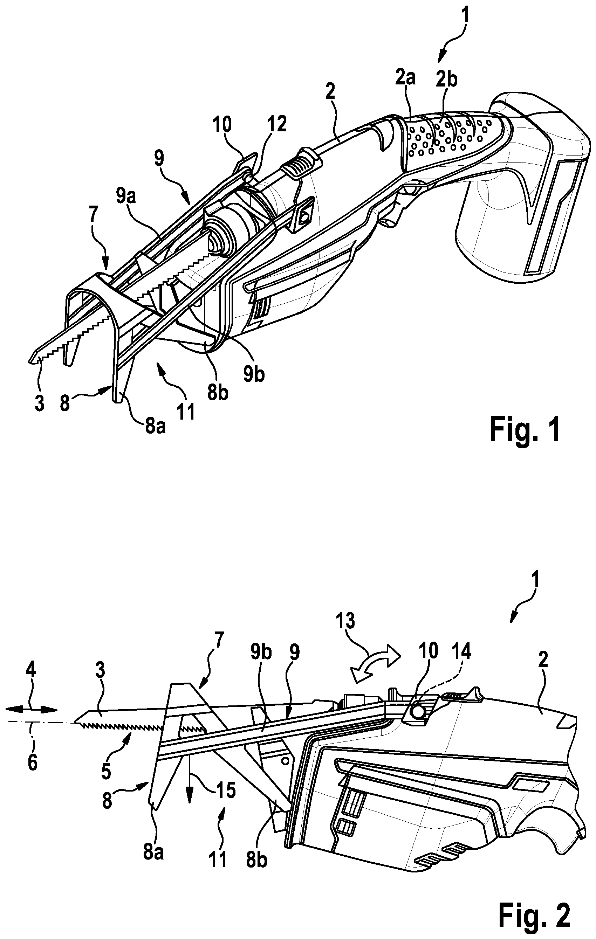

In den Figuren 1 und 2 ist eine als elektrische Säbelsäge 1 (auch Fuchsschwanzsäge oder "Reciprosäge" genannt) ausgeführte Werkzeugmaschine in Form einer Sägemaschine oder -vorrichtung für gerade, hin- und hergehende Sägeblätter gezeigt. Die Säbelsäge 1 ist als Handwerkzeugmaschine ausgeführt, die in einem aus zwei Gehäuseschalen 2a, 2b bestehenden Gehäuse 2 einen elektrischen Antriebsmotor zum Antreiben eines als Sägeblatt 3 ausgeführten Werkzeugs aufweist. Das Sägeblatt 3 übt, wie Fig. 2 zu entnehmen, eine oszillierende, lineare Arbeitsbewegung gemäß Doppelpfeil 4 aus, bei der die Sägezähne 5 des Sägeblatts 3, die in einer Sägezahnlinie 6 stehen, vor und zurück bewegt werden. Die Arbeitsbewegung 4 erfolgt entlang der Sägezahnlinie 6. Statt der linearen Hin- und Herbewegung kann das Sägeblatt auch eine orbitale Bewegung ausführen.

Wie den Figuren 1 und 2 weiter zu entnehmen, ist die Säbelsäge 1 mit einer Stützeinrichtung 7 versehen, die ein Stützelement 8 an einem Trägerteil 9 sowie ein Befestigungselement 10 am Gehäuse 2 umfasst. Das Stützelement 8 ist als Stützwinkel ausgebildet und weist zwei winklig zueinander angeordnete Stützschenkel 8a und 8b auf, die sich nach außen hin öffnen und einen Aufnahmebereich 11 zur Aufnahme eines zu bearbeitenden Gegenstandes bzw. Objekts begrenzen. Das Stützelement 8 ist, wie der perspektivischen Darstellung gemäß Fig. 1 zu entnehmen, U-förmig ausgebildet, wobei jeder U-Schenkel zwei Stützschenkel 8a, 8b mit einem zwischenliegenden Aufnahmebereich 11 aufweist.

Das Trägerteil 9 umfasst zwei Trägerschenkel 9a, 9b, die jeweils an verschiedenen Seiten des U-förmigen Stützelementes 8 geführt und mit dem Stützelement fest verbunden sind. Auf der dem Stützelement 8 gegenüberliegenden Seite sind die Enden der beiden Trägerschenkel 9a, 9b schwenkbar mit dem Befestigungselement 10 verbunden, das lösbar am Gehäuse 2 der Säbelsäge 1 angeordnet ist. Diese Ausführung ermöglicht es, die Stützeinrichtung 7 mit dem Stützelement 8 und dem Trägerteil 9 um die Achse 12 des Schwenkgelenks zwischen Befestigungselement 10 und den Trägerschenkeln 9a, 9b in Schwenkrichtung 13 (Fig. 2) zu verschwenken.

Wie Fig. 2 außerdem zu entnehmen, ist um die Achse 12 des Schwenkgelenks zwischen dem Befestigungselement 10 und den Trägerschenkeln 9a, 9b ein Federelement 14 in Form einer Schenkelfeder gelegt, die das Trägerteil 9 einschließlich Stützelement 8 in die in Fig. 2 dargestellte Ausgangsposition federbelastet. Das Federelement 14 generiert um die Achse 12 ein Moment, das in Höhe des Aufnahmebereichs 11 als ein Kraftpfeil 15 wirkt, welcher zumindest annähernd senkrecht zur Sägezahnlinie 6 des Sägeblatts 3 wirkt. Um das Stützelement 8 gegen die Kraft des Federelements 14 nach oben verschwenken zu können, muss eine Kraft entgegengesetzt zum Kraftpfeil 15 aufgewandt werden. Diese Kraft beträgt vorteilhafterweise weniger als 10 N, beispielsweise 4 N bis 9 N.

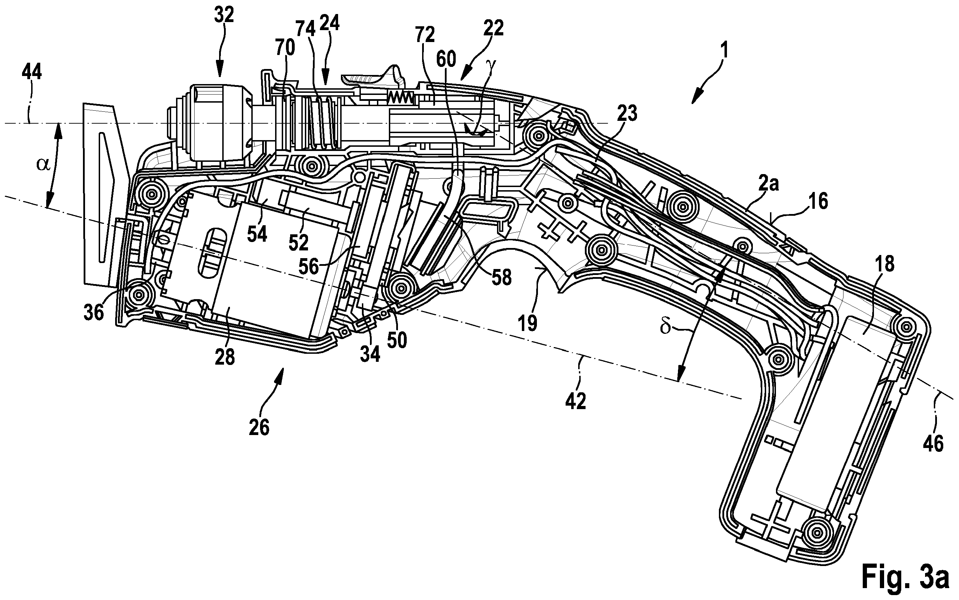

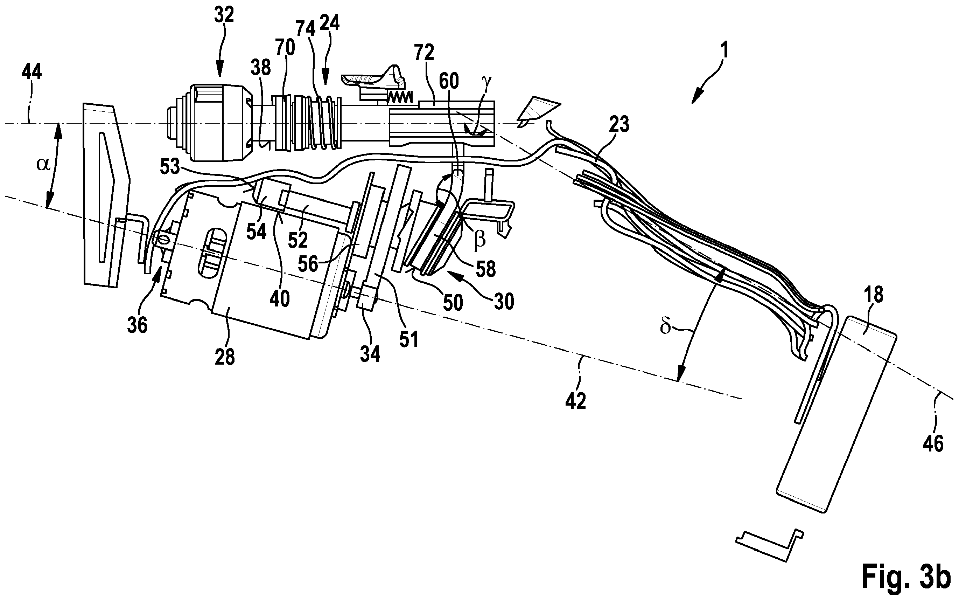

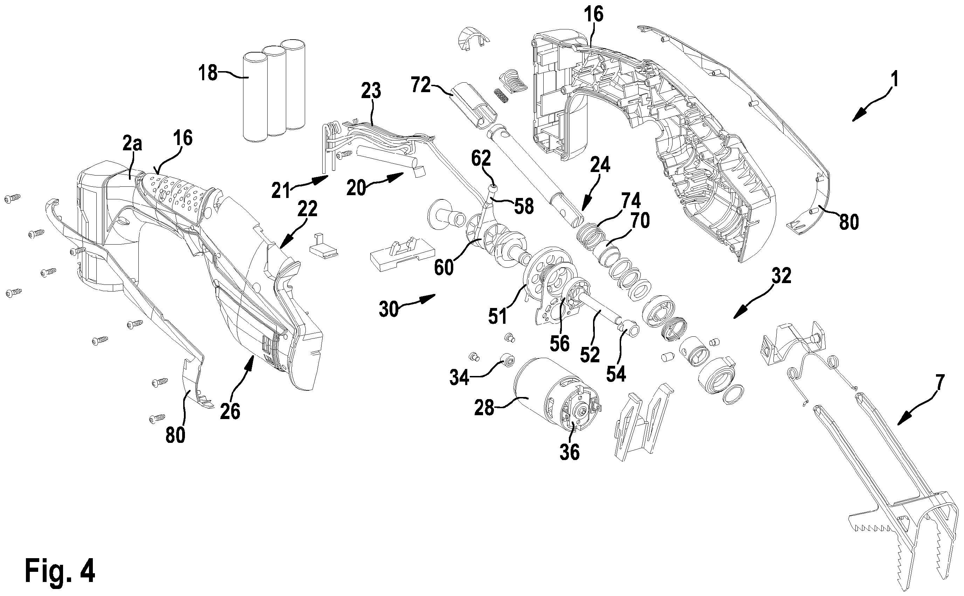

In den Fig. 3a, 3b und 4 sind im Gehäuse 2 angeordneten Komponenten und Baugruppen der Säbelsäge 1 gezeigt.

Das Gehäuse 2 umfasst einen Griffabschnitt 16 in dessen einen Ende ein wiederaufladbarer Akku 18 angeordnet ist, der aber auch auswechselbar ausgebildet sein kann. Alternativ kann hier aber auch ein Kabelanschluss für ein Netzkabel vorgesehen sein. Im Gehäuse 2 ist auch eine Ausnehmung 19 für einen Ein-/Ausschalter 20 vorgesehen. Über den Ein-/Ausschalter 20 wird eine Elektronikbaugruppe 21 betätigt, mit der die Säbelsäge 1 gesteuert wird.

Am vom Akku 18 abgewandten Ende weist das Gehäuse 2 einen Aufnahmebereich 22 für eine Abtriebsspindel 24 auf. Unter dem Aufnahmebereich 22 weist das Gehäuse 2 einen Bauch 26 zur Aufnahme eines Antriebsmotor 28 auf, der unterhalb des Aufnahmebereichs 22 für die Abtriebsspindel 24 liegt. Der Aufnahmebereich 22 und der Bauch 26 weisen eine senkrecht zur Abtriebspindel 24 verlaufende, ovale Querschnittsfläche auf, die die Abtriebsspindel 24 und den Antriebsmotor 28 umschließt. Der Akku 18, der Ein-/Ausschalter 20, die Elektronikbaugruppe 21 und der Antriebsmotor 28 sind über Kabel 23 in miteinander verkabelt.

Die als Säbelsäge 1 ausgebildete Werkzeugmaschine umfasst weiterhin eine hin- und hergehenden Abtriebsspindel 24, die über ein Getriebe 30 mit dem Antriebsmotor 28 gekoppelt ist. Am aus der Säbelsäge 1 herausragenden Ende der Abtriebsspindel 24 ist ein mehrteiliger Befestigungsabschnitt 32 zum Befestigen des Sägeblatts 3 vorgesehen.

Der Antriebsmotor 28 weist einen mit dem Getriebe 30 verbundenen Antriebsabschnitt in Form eines Ritzels 34 und ein vom Getriebe 30 entferntes, erstes Ende 36 auf.

Eine Längsseite 38 der Abtriebsspindel 24 und eine Längsseite 40 des Antriebsmotors 28 verlaufen nebeneinander, so dass der Antriebsmotor 28 neben der Abtriebsspindel 24 angeordnet ist. Das vom Getriebe 30 entfernte, erste Ende 36 des Antriebsmotors 28 ist näher beim Befestigungsabschnitt 32 angeordnet als das mit dem Getriebe verbundene Ritzel 34.

Die Längsachse 42 des Antriebsmotors 28 und die Längsachse 44 der Abtriebsspindel 24 schneiden sich auf der vom Getriebe 30 entfernten Seite und schließen einen Winkel α ein, so dass der Antriebsmotor 28 und die Abtriebsspindel so geneigt sind, dass das Ritzel 34 weiter von der Abtriebsspindel 24 entfernt ist als das erste Ende 36 des Antriebsmotors 28. Der Winkel α beträgt vorzugsweise 17° beträgt, wobei ein Bereich zwischen 15° und 20° auch gut ist und ein Bereich von 5° bis 30° auch ausreicht.

Entlang des Griffabschnitts 16 des Gehäuses 2 bzw. des Handgriffs verläuft eine Längsachse 46, die mit der Längsachse 44 Abtriebsspindel 24 einen stumpfen Winkel γ einschließt, der insbesondere zwischen 15° und 45° liegt, vorzugsweise 30° beträgt. Der erste Winkel α und der stumpfe Winkel γ liegen in einer Ebene und sind auf einer Seite der Spindel angeordnet. Dadurch ergibt sich auf, dass der Antriebsmotor, insbesondere bei waagerechter Anordnung der Säbelsäge, unterhalb der Spindel angeordnet ist.

Es schließen also der Antriebsmotor 28 und die Abtriebsspindel 24 bzw. deren Längsachsen 42 und 44 einen spitzen Winkel α ein. Außerdem schließen der Handgriff und die Abtriebsspindel 24 einen stumpfen Winkel ein γ. Ferner schließen der Handgriff und der Antriebsmotor 28 bzw. deren Längsachsen 42 und 46 einen spitzen Winkel δ ein. Dadurch ergibt sich eine sehr kompakte Anordnung der Baugruppen.

Das Getriebe 30 umfasst eine Taumelplattenbaugruppe 50, die auf einer Getriebewelle 52 angeordnet ist, die parallel zur Längsachse 42 des Antriebsmotors 28 verläuft. Die Getriebewelle 52 liegt in einer vom Antriebsmotor 28 und der Abtriebsspindel 24 gebildeten Lücke 53 und ist vorzugsweise fliegend gelagert ist. Zur Lagerung ist hierzu einerseits ein Gleitlager 54 vorgesehen, das im Bauch 26 zwischen dem Antriebsmotor 28 und der Abtriebsspindel 24 angeordnet ist. Andererseits ist ein Kugellager 56 vorgesehen, das ebenfalls im Bauch 26 angeordnet ist. Es versteht sich, dass alle wesentliche Komponenten durch komplementäre Ausnehmungen in den Gehäuseschalen 2a, 2b gehalten sind. Es ist aber auch denkbar, dass ein Kugellager an der vom Antriebsmotor 28 entfernten Seite der Taumelplattenbaugruppe 50 angeordnet ist.

Zum Antrieb der Taumelplattenbaugruppe 50 ist ein Zahnrad 51 vorgesehen, das drehfest auf der Getriebewelle 52 angeordnet ist und vom Ritzel 34 angetrieben wird.

Die Taumelplattenbaugruppe 50 weist einen ersten Abschnitt 58 auf, der um die Getriebewelle 52 angeordnet ist und einen zweiten Abschnitt 60, der in die Abtriebsspindel 24 eingreift. Der erste und zweite Abschnitt 58, 60 schließen einen Winkel β ein, der 90° - α beträgt.

Am Ende des zweiten Abschnitts 60 ist ein Kugelkopf 62 ausgebildet, der in eine Ausnehmung 64 in der Abtriebsspindel 35 greift. Durch diese Anordnung erreicht man trotz der kompakten Bauform einen recht großen Hub der Abtriebsspindel 24.

Die Abtriebsspindel 24 ist in einem vorderen, über dem Antriebsmotor 28 angeordneten Gleitlager 70 und einem am im Gehäuse 2 angeordneten Gleitlager 72 gelagert. Das vordere Gleitlager 70 ist über eine Feder 74 abgestützt.

Seitlich an den Gehäuseschalen 2a, 2b befinden sich noch Deckstreifen 80. Die Gehäuseschalen 2a, 2b werden über Schrauben 82 montiert.

Anstelle eines Getriebes mit Taumelplattenbaugruppe kann auch ein Winkelgetriebe vorgesehen sein, wobei die Taumelplattenbaugruppe günstiger herstellbar ist.

Neben eine Ausbildung als Säbelsäge ist es auch denkbar, dass der Abtriebsspindel neben der Hubbewegung eine Drehbewegung überlagert wird, so dass die Werkzeugmaschine als eine Schlagbohrmaschine ausgeführt ist.

## Patentansprüche

1. Werkzeugmaschine (1), insbesondere Säbelsäge, mit einer hin- und hergehenden Abtriebsspindel (24) und einem Antriebsmotor (28), die über ein Getriebe (30) miteinander gekoppelt sind, wobei eine Längsseite (38) der Abtriebsspindel (24) und eine Längsseite (40) des Antriebsmotors (28) nebeneinander verlaufen, so dass der Antriebsmotor (28) neben der Abtriebsspindel (24) angeordnet ist, **dadurch gekennzeichnet, dass** die Abtriebsspindel (24) in einem vorderen, über dem Antriebsmotor (28) angeordneten Gleitlager (70) und einem in einem Gehäuse (2) angeordneten Gleitlager (72) gelagert ist, wobei das vordere Gleitlager (70) über eine Feder (74) abgestützt ist.

2. Werkzeugmaschine (1) nach Anspruch 1 **dadurch gekennzeichnet, dass** die Abtriebsspindel (24) einen Befestigungsabschnitt zum Befestigen eines Werkzeugs (3) aufweist, dass der Antriebsmotor (28) einen mit dem Getriebe (30) verbundenen Antriebsabschnitt (34) und ein vom Getriebe (30) entferntes, erstes Ende (36) aufweist und dass das vom Getriebe (30) entfernte, erste Ende (36) des Antriebsmotors (28) näher beim Befestigungsabschnitt (32) angeordnet ist als der mit dem Getriebe (30) verbundene Antriebsabschnitt (34).

3. Werkzeugmaschine (1) nach Anspruch 1 oder 2, **dadurch gekennzeichnet, dass** sich die Längsachse (42) des Antriebsmotors (28) und die Längsachse (44) der Abtriebsspindel (24) auf der vom Getriebe (30) entfernten Seite unter einem Winkel (α) schneiden, so dass der Antriebsmotor (28) und die Abtriebsspindel (24) so geneigt sind, dass der Antriebsabschnitt (34) weiter von der Abtriebsspindel (24) entfernt ist als das erste Ende (26) des Antriebsmotors (28).

4. Werkzeugmaschine (1) nach Anspruch 3, **dadurch gekennzeichnet, dass** der Winkel (α) zwischen 5° und 30°, insbesondere zwischen 15° und 20°, liegt und vorzugsweise 17° beträgt.

5. Werkzeugmaschine (1) nach einem der vorhergehenden Ansprüche,
**dadurch gekennzeichnet, dass** das Getriebe (30) eine Taumelplattenbaugruppe (50) umfasst, die auf einer Getriebewelle (52) angeordnet ist, die parallel zur Längsachse (42) des Antriebsmotors (28) verläuft.

6. Werkzeugmaschine (1) nach Anspruch 5, **dadurch gekennzeichnet, dass** die Getriebewelle (52) in einer vom Antriebsmotor (28) und der Abtriebsspindel (24) gebildeten Lücke (53) liegt und vorzugsweise fliegend gelagert ist.

7. Werkzeugmaschine (1) nach Anspruch 5 oder 6, **dadurch gekennzeichnet, dass** die Taumelplattenbaugruppe (50) einen ersten Abschnitt (58) aufweist, der um die Getriebewelle (52) angeordnet ist und einen zweiten Abschnitt (60), der in die Abtriebsspindel (24) eingreift, und dass der erste und zweite Abschnitt (58, 60) einen Winkel (β) einschließen, der 90° - α beträgt.

8. Werkzeugmaschine (1) nach einem der vorhergehenden Ansprüche,
**dadurch gekennzeichnet, dass** die Werkzeugmaschine (1) einen Handgriff (16) aufweist, der mit der Abtriebsspindel (24) einen stumpfen Winkel (γ) einschließt, der insbesondere zwischen 135° und 165° liegt, vorzugsweise 150° beträgt.

9. Werkzeugmaschine (1) nach Anspruch 7, **dadurch gekennzeichnet, dass** der erste Winkel (α) und der stumpfe Winkel (γ) in einer Ebene und auf einer Seite der Abtriebsspindel (24) angeordnet sind, so dass der Antriebsmotor (28) unterhalb der Abtriebsspindel (24) angeordnet ist.

10. Werkzeugmaschine (1) nach einem der vorhergehenden Ansprüche mit einem Gehäuse (2), das einen Aufnahmebereich (22) für eine Abtriebspindel (24) aufweist, ferner mit einem Griffabschnitt (15), mit einem Bauch (26) zur Aufnahme eines Antriebsmotor (28), der unterhalb des Aufnahmebereichs (22) für die Abtriebsspindel (24) liegt, wobei der Aufnahmebereich (22) und der Bauch (26) eine senkrecht zur Abtriebspindel (24) verlaufende, ovale Querschnittsfläche aufweisen, die den Antriebsmotor (28) und die Abtriebsspindel (24) zumindest teilweise umschließt.

11. Werkzeugmaschine (1) nach Anspruch 10, **dadurch gekennzeichnet, dass** das Gehäuse (2) einen Griffabschnitt 16 umfasst, in dessen einen Ende ein wiederaufladbarer oder ein auswechselbarer Akku (18) angeordnet ist.

12. Werkzeugmaschine (1) nach Anspruch 6, **dadurch gekennzeichnet, dass** zur Lagerung der Getriebewelle (52) einerseits ein Gleitlager (54) vorgesehen ist, das im Bauch (26) zwischen dem Antriebsmotor (28) und der Abtriebsspindel (24) angeordnet ist und andererseits ein Kugellager (56), das ebenfalls im Bauch (26) angeordnet ist.

13. Werkzeugmaschine (1) zumindest nach Anspruch 5, **dadurch gekennzeichnet, dass** die Taumelplattenbaugruppe (50) einen ersten Abschnitt (58) aufweist, der um die Getriebewelle (52) angeordnet ist und einen zweiten Abschnitt (60), der in die Abtriebsspindel (24) eingreift.

14. Werkzeugmaschine (1) zumindest nach Anspruch 13, **dadurch gekennzeichnet, dass** am Ende des zweiten Abschnitts (60) ein Kugelkopf (62) ausgebildet ist, der in eine Ausnehmung (64) in der Abtriebsspindel (35) greift.

## Claims

1. Power tool (1), in particular reciprocating saw, having an output spindle (24) that moves back and forth and a drive motor (28), which are coupled to one another via a transmission (30), wherein a longitudinal side (38) of the output spindle (24) and a longitudinal side (40) of the drive motor (28) extend along side one another such that the drive motor (28) is arranged next to the output spindle (24), **characterized in that** the output spindle (24) is mounted in a front plain bearing (70) arranged above the drive motor (28) and a plain bearing (72) arranged in a housing (2), wherein the front plain bearing (70) is supported via a spring (74).

2. Power tool (1) according to Claim 1, **characterized in that** the output spindle (24) has a fastening portion for fastening a tool (3), **in that** the drive motor (28) has a drive portion (34) connected to the transmission (30) and a first end (36) remote from the transmission (30), and **in that** the first end (36), remote from the transmission (30), of the drive motor (28) is arranged closer to the fastening portion (32) than the drive portion (34) connected to the transmission (30).

3. Power tool (1) according to Claim 1 or 2, **characterized in that** the longitudinal axis (42) of the drive motor (28) and the longitudinal axis (44) of the output spindle (24) intersect on the side remote from the transmission (30) at an angle (α) such that the drive motor (28) and the output spindle (24) are inclined such that the drive portion (34) is further away from the output spindle (24) than the first end (26) of the drive motor (28) .

4. Power tool (1) according to Claim 3, **characterized in that** the angle (α) is between 5° and 30°, in particular between 15° and 20°, and is preferably 17°.

5. Power tool (1) according to one of the preceding claims, **characterized in that** the transmission (30) comprises a swash plate assembly (50) which is arranged on a transmission shaft (52) that extends parallel to the longitudinal axis (42) of the drive motor (28).

6. Power tool (1) according to Claim 5, **characterized in that** the transmission shaft (52) is located in a gap (53) formed by the drive motor (28) and the output spindle (24) and is preferably mounted in a cantilevered manner.

7. Power tool (1) according to Claim 5 or 6, **characterized in that** the swash plate assembly (50) has a first portion (58) which is arranged about the transmission shaft (52) and a second portion (60) which engages in the output spindle (24), and **in that** the first and second portions (58, 60) enclose an angle (β) which measures 90° - α.

8. Power tool (1) according to one of the preceding claims, **characterized in that** the power tool (1) has a handle (16) which encloses an obtuse angle (γ) of in particular between 135° and 165°, preferably 150°, with the output spindle (24).

9. Power tool (1) according to Claim 7, **characterized in that** the first angle (α) and the obtuse angle (γ) are arranged in one plane and on one side of the output spindle (24) such that the drive motor (28) is arranged beneath the output spindle (24).

10. Power tool (1) according to one of the preceding claims, having a housing (2) which has a receiving region (22) for an output spindle (24), also having a handle portion (15), having a belly (26) for receiving a drive motor (28), which is located beneath the receiving region (22) for the output spindle (24), wherein the receiving region (22) and the belly (26) have an oval cross-sectional area which extends perpendicularly to the output spindle (24) and at least partially encloses the drive motor (28) and the output spindle (24).

11. Power tool (1) according to Claim 10, **characterized in that** the housing (2) comprises a handle portion (16), in one end of which a rechargeable or interchangeable battery (18) is arranged.

12. Power tool (1) according to Claim 6, **characterized in that**, for mounting the transmission shaft (52), provision is made both of a plain bearing (54), which is arranged in the belly (26) between the drive motor (28) and the output spindle (24), and of a ball bearing (56), which is likewise arranged in the belly (26).

13. Power tool (1) at least according to Claim 5, **characterized in that** the swash-plate assembly (50) has a first portion (58), which is arranged around the transmission shaft (52), and a second portion (60), which engages in the output spindle (24).

14. Power tool (1) at least according to Claim 13, **characterized in that** a ball head (62) is formed at the end of the second portion (60), said ball head engaging in a recess (64) in the output spindle (35) .

## Revendications

1. Machine-outil (1), en particulier scie sabre, comprenant une broche de sortie (24) qui accomplit un mouvement de va-et-vient et un moteur d'entraînement (28) qui sont accouplés ensemble par un train d'engrenages (30), une face longitudinale (38) de la broche de sortie (24) et une face longitudinale (40) du moteur d'entraînement (28) s'étendant l'une à côté de l'autre de sorte que le moteur d'entraînement (28) est disposé à côté de la broche de sortie (24),
**caractérisée en ce que** la broche de sortie (24) est montée dans un palier lisse avant (70) disposé au-dessus du moteur d'entraînement (28), et dans un palier lisse (72) disposé dans un boîtier (2), le palier lisse avant (70) étant soutenu par un ressort (74).

2. Machine-outil (1) selon la revendication 1, **caractérisée en ce que** la broche de sortie (24) présente une partie de fixation permettant de fixer un outil (3), **en ce que** le moteur d'entraînement (28) présente une partie d'entraînement (34) reliée au train d'engrenages (30) et une première extrémité (36) éloignée du train d'engrenages (30), et **en ce que** la première extrémité (36), éloignée du train d'engrenages (30), du moteur d'entraînement (28) est disposée plus près de la partie de fixation (32) que la partie d'entraînement (34) reliée au train d'engrenages (30).

3. Machine-outil (1) selon la revendication 1 ou 2, **caractérisée en ce que** l'axe longitudinal (42) du moteur d'entraînement (28) et l'axe longitudinal (44) de la broche de sortie (24) se croisent sur le côté éloigné du train d'engrenages (30) selon un angle (α) de sorte que le moteur d'entraînement (28) et la broche de sortie (24) sont inclinés de telle sorte que la partie d'entraînement (34) est plus éloignée de la broche de sortie (24) que la première extrémité (26) du moteur d'entraînement (28).

4. Machine-outil (1) selon la revendication 3, **caractérisée en ce que** l'angle (α) est compris entre 5° et 30°, en particulier entre 15° et 20°, et est de préférence égal à 17°.

5. Machine-outil (1) selon l'une quelconque des revendications précédentes, **caractérisée en ce que** le train d'engrenages (30) comprend un ensemble de plateau oscillant (50) qui est disposé sur un arbre de transmission (52) qui s'étend en parallèle à l'axe longitudinal (42) du moteur d'entraînement (28).

6. Machine-outil (1) selon la revendication 5, **caractérisée en ce que** l'arbre de transmission (52) est situé dans un vide (53) formé par le moteur d'entraînement (28) et la broche de sortie (24) et est de préférence monté en porte-à-faux.

7. Machine-outil (1) selon la revendication 5 ou 6, **caractérisée en ce que** l'ensemble de plateau oscillant (50) présente une première partie (58) qui est disposée autour de l'arbre de transmission (52), et une deuxième partie (60) qui vient en prise dans la broche de sortie (24), et **en ce que** la première et la deuxième partie (58, 60) forment un angle (β) qui est égal à 90° - α.

8. Machine-outil (1) selon l'une quelconque des revendications précédentes, **caractérisée en ce que** la machine-outil (1) présente une poignée (16) qui forme avec la broche de sortie (24) un angle obtus (γ) qui est compris en particulier entre 135° et 165°, étant de préférence égal à 150°.

9. Machine-outil (1) selon la revendication 7, **caractérisée en ce que** le premier angle (α) et l'angle obtus (γ) sont disposés dans un plan et sur un côté de la broche de sortie (24) de sorte que le moteur d'entraînement (28) est disposé au-dessous de la broche de sortie (24).

10. Machine-outil (1) selon l'une quelconque des revendications précédentes, comprenant un boîtier (2) qui présente une zone de réception (22) pour une broche de sortie (24), comprenant en outre une partie de poignée (15) pourvue d'une convexité (26) servant à recevoir un moteur d'entraînement (28) et qui est située au-dessous de la zone de réception (22) pour la broche de sortie (24), la zone de réception (22) et la convexité (26) présentant une superficie de la section ovale s'étendant perpendiculairement à la broche de sortie (24) et qui entoure au moins partiellement le moteur d'entraînement (28) et la broche de sortie (24).

11. Machine-outil (1) selon la revendication 10, **caractérisée en ce que** le boîtier (2) comprend une partie de poignée (16) dans ladite une extrémité de laquelle est disposé un accumulateur (18) rechargeable ou amovible.

12. Machine-outil (1) selon la revendication 6, **caractérisée en ce que** pour le montage de l'arbre de transmission (52), d'une part un palier lisse (54) est prévu qui est disposé dans la convexité (26) entre le moteur d'entraînement (28) et la broche de sortie (24), et d'autre part un roulement à billes (56) est prévu qui est également disposé dans la convexité (26).

13. Machine-outil (1) au moins selon la revendication 5, **caractérisée en ce que** l'ensemble de plateau oscillant (50) présente une première partie (58) qui est disposée autour de l'arbre de transmission (52) et une deuxième partie (60) qui vient en prise dans la broche de sortie (24).

14. Machine-outil (1) au moins selon la revendication 13, **caractérisée en ce qu'**à l'extrémité de la deuxième partie (60) est réalisée une rotule (62) qui vient en prise dans un évidement (64) dans la broche de sortie (35) .
